(19) Europäisches Patentamt
European Patent Office
Office européen des brevets

(11) **EP 2 936 769 B1**

(12) **FASCICULE DE BREVET EUROPEEN**

(45) Date de publication et mention de la délivrance du brevet:
**04.07.2018 Bulletin 2018/27**

(21) Numéro de dépôt: **13815050.3**

(22) Date de dépôt: **04.12.2013**

(51) Int Cl.:
*H04L 29/06* (2006.01)    *H04W 8/18* (2009.01)

(86) Numéro de dépôt international:
**PCT/FR2013/052944**

(87) Numéro de publication internationale:
**WO 2014/096608 (26.06.2014 Gazette 2014/26)**

(54) **GESTION DE L'ACCÈS A UNE PLURALITÉ DE MODULES SÉCURITÉ INCORPORÉS DANS UN DISPOSITIF DE TRAITEMENT DE DONNÉES**

VERWALTUNG DES ZUGANGS ZU MEHREREN SICHERHEITSMODULEN IN EINER DATENVERARBEITUNGSVORRICHTUNG

MANAGEMENT OF ACCESS TO A PLURALITY OF SECURITY MODULES INCORPORATED INTO A DATA-PROCESSING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2012 FR 1262436**

(43) Date de publication de la demande:
**28.10.2015 Bulletin 2015/44**

(73) Titulaire: **Orange**
**75015 Paris (FR)**

(72) Inventeurs:
• **AUVRAY, Vincent**
**F-50460 Tonneville (FR)**
• **HALLAY, Sébastien**
**F-14210 Evrecy (FR)**

(56) Documents cités:
**US-A1- 2009 061 932    US-A1- 2012 276 955**

EP 2 936 769 B1

## Description

### Domaine technique

L'invention se rapporte à un procédé de gestion de l'accès à un module de sécurité dans un dispositif incorporant une pluralité de modules de sécurité.

L'invention s'applique tout particulièrement lorsque le module de sécurité est un module dont l'utilisation nécessite la saisie d'un code avant utilisation.

Un tel module est typiquement une carte SIM (sigle anglo-saxon de Subscriber Identity Module) délivrée par un opérateur de télécommunication pour l'accès à son réseau de télécommunication.

La carte SIM en question nécessite la saisie d'un code PIN (sigle anglo-saxon de Personal Identification Number) avant son utilisation.

Le dispositif visé ci-dessus est tout particulièrement un téléphone, un smartphone, une tablette. Dans la suite, le téléphone servira à illustrer un mode de réalisation du procédé de l'invention.

### Etat de la technique

Le code PIN associé à une carte SIM permet de sécuriser son utilisation. La Carte SIM est verrouillée par défaut. Ainsi, lorsqu'elle est mise sous tension, au démarrage, la carte SIM requiert une saisie du code PIN ; si le code PIN saisi correspond à celui que la carte SIM stocke, la carte SIM est déverrouillée et peut être utilisée par le terminal dans lequel il est installé. Dans la négative, la carte SIM est inutilisable.

Aujourd'hui, certains terminaux incorporent plusieurs cartes SIM, le plus souvent deux voire trois cartes.

Comme pour les terminaux mono-carte SIM, ces terminaux multi-cartes SIM requièrent au démarrage du terminal qu'un utilisateur saisisse les codes PIN des différentes cartes les uns après les autres ; en l'espèce, dans le cas où le terminal incorpore deux cartes SIM, l'utilisateur doit saisir le code de la 1ere carte SIM, puis dans un second temps le code PIN de la 2$^{nde}$ carte SIM.

Cette procédure répétitive est à renouveler à chaque démarrage du terminal (sous-entendu des cartes SIM), à chaque changement de carte SIM, à chaque sortie d'un mode connu sous le nom de « mode avion ». Rappelons que le « mode Avion » permet de désactiver les fonctionnalités sans fil d'un terminal afin de respecter la réglementation aérienne. Un passage de ce mode avion à un mode normal nécessite la saisie d'un code PIN.

Cette procédure répétitive peut s'avérer pénible voir difficile lorsque l'utilisateur possède plusieurs cartes SIM, ce qui est souvent le cas dans des pays où l'usage est de profiter de différentes offres tarifaires disponibles chez différents opérateurs de télécommunication.

L'invention offre une solution ne présentant pas les inconvénients de l'état de la technique.

Le document US 2012/276955, 1er novembre 2012 (2012-11-01), décrit un terminal portable comprenant un premier et un deuxième module, le premier étant le module maître, le second étant un esclave. Le document enseigne la fourniture de codes de sécurité pour déverrouiller les modules puis les codes de sécurité sont stockés sur le terminal.

### L'invention

A cet effet, selon un aspect fonctionnel, l'invention a pour objet un procédé de gestion de l'utilisation dans un terminal d'une pluralité de modules de sécurité gérés par une entité apte à requérir la fourniture de codes de sécurité pour déverrouiller les modules, caractérisé en ce qu'il comprend

- une première phase d'accès aux modules comprenant une étape de réception par l'entité des codes des modules et une étape d'émission des codes reçus aux modules de sécurité, suivi d'une étape d'enregistrement d'au moins un code reçu dans un module de sécurité, dit module principal ;
- une deuxième phase d'accès ultérieur au cours de laquelle un déverrouillage du module principal est suivi d'une étape de transmission d'au moins un code depuis le module principal à destination d'au moins un autre module de sécurité correspondant audit au moins un code.

L'invention requiert la saisie de l'ensemble des codes uniquement lors de la première utilisation ; ensuite, lors d'une utilisation ultérieure, la saisie d'un seul code suffit à savoir celui du module principal. Une fois le code du module principal saisit, le module principal transmet le ou les code(s) à destination des autres modules.

Les modules forment un ensemble de module. Selon un premier mode de mise en oeuvre particulier de l'invention, la première phase d'accès s'effectue après une modification dudit ensemble. Ainsi, la première étape d'accès s'effectue-t-elle après un ajout, remplacement ou suppression d'au moins un module. En effet, suite à une suppression/remplacement de modules, les codes stockés dans le module principal ne sont plus à jour. Cette caractéristique permet de mettre à jour les codes des modules.

Selon un deuxième mode de mise en oeuvre particulier de l'invention, qui pourra être mis en oeuvre alternativement ou cumulativement avec le précédent, la première phase d'accès s'effectue après réception d'un message issu d'au moins un module signalant un code erroné. Cette caractéristique évite de prévoir dans le terminal un module détectant une modification matérielle dans le terminal, en particulier un ajout ou suppression d'au moins un module. La réception d'un message signalant qu'un (ou plus) code PIN est erroné est suffisant pour déduire qu'un changement au niveau des modules a eu lieu ; si c'est le cas, la première phase est de nouveau réalisée.

Selon un aspect matériel, l'invention a trait à un programme d'ordinateur apte à être mis en oeuvre sur comportant des instructions de code pour la mise en oeuvre du procédé selon l'une des revendications précédentes, lorsque ce programme est exécuté par un processeur.

La nature du programme visé ci-dessus est quelconque. Il peut être téléchargé depuis un réseau de communication et/ou enregistré sur un support lisible par ordinateur.

Selon un autre aspect matériel, l'invention a trait à une entité apte à être mise en oeuvre dans un terminal incluant une pluralité de modules de sécurité aptes à requérir la fourniture des codes de sécurité pour déverrouiller les modules, caractérisé en ce qu'elle comprend

- Un module de réception des codes ;

- Un module de transmission des codes à destination d'un module de sécurité déverrouillé.

Selon un autre aspect matériel, l'invention a trait à un module de sécurité apte à être couplé à un terminal, ledit module étant apte à être déverrouillé au moyen d'un premier code de sécurité, caractérisé en ce qu'il comprend

- Un module de réception d'au moins un second code de sécurité associé à au moins un autre module ;

- Un module de stockage dudit au moins un second code ;

- Un module de transmission dudit au moins un second code après son déverrouillage.

Selon un autre aspect matériel, l'invention a trait un terminal comprenant une entité telle que définie ci-dessus et une pluralité de modules de sécurité dont un défini ci-dessus.

L'invention sera mieux comprise à la lecture de la description qui suit, donnée à titre d'exemple et faite en référence aux dessins annexés sur lesquels :

La figure 1 est une vue schématique d'un terminal incluant une pluralité de modules de sécurité.

Les figures 2 et 3 représentent un mode de réalisation du procédé de l'invention.

Description détaillée d'un exemple de réalisation illustrant l'invention

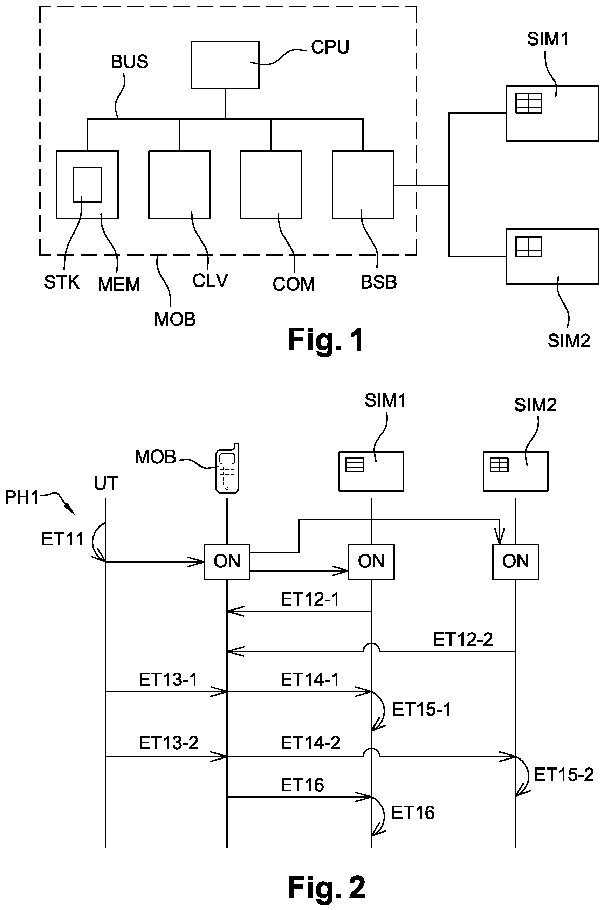

La figure 1 représente un terminal TRM doté dans notre exemple de deux modules de sécurité illustrés au moyen de cartes SIM.

Les cartes SIM sont généralement gérées par des opérateurs de télécommunication.

Rappelons qu'une carte SIM est une puce comprenant un microcontrôleur. Elle est utilisée pour stocker des informations spécifiques à un utilisateur abonné d'un réseau mobile, en particulier pour des réseaux de type GSM, UMTS et LTE.

Comme expliqué précédemment, la carte SIM est verrouillée par défaut. Ce verrouillage de la carte SIM (fonction nommée « SIM lock » par l'homme du métier) permet aux opérateurs visés ci-dessus de restreindre l'utilisation de leur terminal mobile (téléphone) à une carte SIM ou un groupe de cartes SIM.

Ces cartes stockent un logiciel normalisé connu sous le nom de « SIM Toolkit ». Rappelons que le logiciel SIM Toolkit permet à des applications, exécutées sur la carte SIM, de transmettre des commandes au terminal tel qu'une commande d'affichage d'un texte sur l'écran du terminal ; etc. On se reportera à la norme 3GPP TS 11.14 V8.18.0, intitulée " 3rd Generation Partnership Project; Specification of the SIM Application Toolkit for the Subscriber Identity Module - Mobile Equipment (SIM - ME) interface (Release 1999), pour plus de détails sur le fonctionnement du logiciel SIM Toolkit.

Dans notre exemple, le terminal comprend

- un processeur CPU ;

- un module de saisie pour saisir un code de sécurité ; ce module est par exemple un clavier physique CLV mais pourrait être un clavier virtuel affiché sur un écran tactile ;

- une mémoire MEM apte à stocker des données; notamment une partie du logiciel SIM toolkit permettant de créer une session appelée « proactive SIM session" dans la norme vise ci-dessus. Cette session a pour objet une séquence de commandes et des réponses SIM Toolkit.

- un module d'interfaçage BSB apte à interfacer le processeur CPU du terminal et les cartes SIM ; Ce module est par exemple un module bande basse (traduction de l'expression anglo-saxonne de « device Baseband) commu de l'homme du métier ;

- un module de communication COM pour communiquer avec un réseau de communication tel qu'un réseau mobile de type 3G, ou WIFI.

Les éléments décrits ci-dessus ainsi que le microprocesseur CPU sont reliés entre eux par l'intermédiaire d'un premier bus BUS.

A noter que les bus décrits ci-dessus ont pour fonction d'assurer le transfert de données numériques entre les différents circuits reliés au microprocesseur par un bus. Dans notre exemple, le bus en question inclut un bus de données et un bus de contrôle.

A noter aussi que, dans notre exemple, les mémoires décrites ci-dessus sont des mémoires permanentes accessibles en écriture et lecture, par exemple de type flash.

Les terminaux incluent également une mémoire vive (non représentée) respective pour stocker de manière non durable des données de calcul utilisées lors de la mise en oeuvre d'un procédé selon des modes de réalisation. Ces mémoires ne sont pas représentées sur les dessins car inutiles pour l'exposé de l'invention.

La communication entre le terminal et le réseau requiert la saisie de codes. En effet, à chaque carte SIM correspond un code PIN qu'un utilisateur doit saisir sur le terminal pour déverrouiller la carte SIM. Une fois la carte SIM déverrouillée, un utilisateur peut accéder à un réseau de télécommunication au travers du terminal.

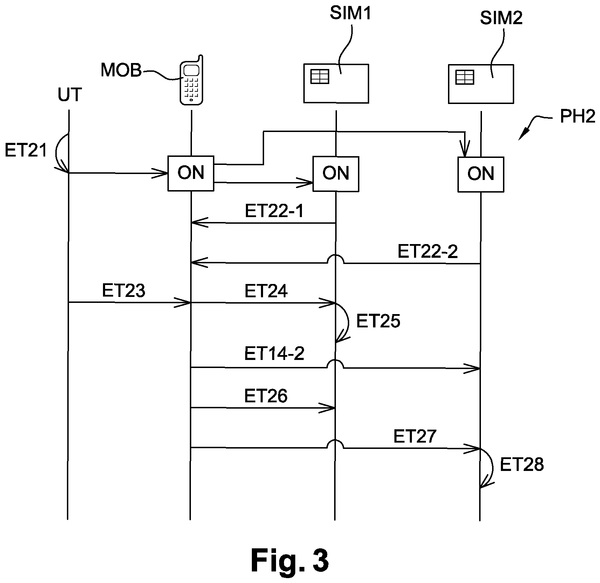

Les figures 2 et 3 illustrent sous forme d'échange de données un mode de réalisation de l'invention.

Le nombre de cartes SIM peut être quelconque ; cependant afin de simplifier l'exposé de l'invention, dans notre exemple, seules deux cartes sont installées dans le terminal.

Dans cette configuration, quatre axes sont représentés sur les figures 2 et 3 :

- Un premier axe correspond au clavier du terminal (sous-entendu à l'utilisateur UT du terminal) ;

- un deuxième axe correspond au terminal, plus précisément à l'entité SIM Toolkit ;

- et deux autres axes correspondants aux deux cartes SIM1 et SIM2 présentes dans le terminal respectivement.

Les deux cartes forment un ensemble de cartes de SIM.

Naturellement, sur les figures 2 et 3, les échanges décrits ne représentent qu'un sous-ensemble des échanges pouvant avoir lieu.

Le procédé de l'invention se décompose en deux principales phases :

- Une phase initiale PH1 ayant pour objet la fourniture des codes PIN afin de débloquer les cartes SIM et le stockage des codes saisis;

- Une phase ultérieure PH2 de déblocage des cartes SIM selon un mode de réalisation du procédé de l'invention.

La première phase PH1 comprend plusieurs étapes référencées ET1n ou ET1n-k (n=1 à 5, k=1, 2), « n » visant une étape particulière de cette première phase et « k » la carte concernée par l'étape « n » en question.

Lors d'une première étape ET11 (ON), l'utilisateur met sous tension le terminal. L'entité STK est exécutée afin de gérer l'accès aux différentes cartes SIM. A ce stade, les cartes SIM sont alimentées (ON) et entament une procédure de démarrage respective.

Lors d'une deuxième étape ET12-1 et ET12-2, l'entité STK reçoit des demandes de saisie de code PIN issues de la première et de la deuxième carte, respectivement. Pour chaque demande, l'entité STK requiert la saisie par l'utilisateur des codes PIN successivement.

Lors d'une troisième étape ET13-1 et ET13-2, l'utilisateur saisit les codes PIN1 et PIN2 des deux cartes, respectivement.

Ayant reçu tous les codes PIN1 et PIN2, l'entité STK enclenche deux actions qui peuvent être réalisées simultanément ou de façon décorellées.

Une première action a pour objet l'envoi, lors d'une quatrième étape ET14-1 et ET4-2, des codes saisis aux cartes pour que la première et la deuxième carte se déverrouillent, respectivement. Le déverrouillage consiste pour chaque carte SIM à comparer le code PIN reçu avec un code PIN stocké dans une mémoire de la carte SIM ; s'il y a correspondance, la carte est déverrouillée et peut être utilisée par exemple pour accéder au réseau de télécommunication.

On fait l'hypothèse que les codes PIN saisis sont corrects. Lors d'une étape ET15-1 et ET15-2, les cartes SIM se déverrouillent.

Une deuxième action a pour objet la transmission des codes PIN depuis l'entité à une carte dite « carte principale » choisie parmi les cartes présentes dans le terminal et pouvant assurer la fonction de carte principale conformément au principe de l'invention. Dans notre exemple de réalisation, la carte SIM principale choisie est la première carte SIM1. Dans cette configuration, l'entité transmet le code PIN2 de la deuxième carte SIM2 à la carte principale SIM1.

Dans notre exemple, le code PIN2 est transmis avec l'identifiant de la carte ID-SIM2.

Ultérieurement, suite à l'enregistrement des codes et identifiants correspondants dans la carte SIM principale, nous faisons l'hypothèse que l'utilisateur éteint son terminal.

La deuxième phase PH2 comprend plusieurs étapes référencées ET2m ou ET2m-k (m=1 à 7, k=1, 2), « m » visant une étape particulière de cette première phase et « k » la carte concernée par l'étape en question.

Les premières étapes ET21(ON), ET22-1, ET22-2, ET23, ET24 et ET25 sont les mêmes que celles décrites en référence à la première phase PH1.

Suite à la cinquième étape, c'est-à-dire suite au déverrouillage de la carte principale, cette dernière transmet, grâce à un module de transmission présent dans la carte principale, lors d'une sixième étape ET26, à l'entité STK le code de la deuxième carte SIM2 à savoir le code PIN2.

Lors d'une septième étape ET27, l'entité STK transmet à la deuxième carte SIM2 le deuxième code PIN2. Si ce code est correct, la deuxième carte SIM2 se déverrouille lors d'une huitième étape ET28.

L'exemple qui précède se base sur deux cartes SIM pour simplifier l'exposé de l'invention ; cependant le principe de l'invention peut s'étendre à un nombre quelconque de cartes SIM. Supposons que le terminal inclut « n » cartes SIM ; dans cette configuration, chaque code est transmis en association avec un identifiant ID-SIMk de la carte concernée :

ID-SIMk/code PINk

k= 1 à n

Naturellement, la carte principale SIM1 connaissant son propre code PIN1, ce dernier code, et identifiant associé ID-SIM1, n'est pas transmis par l'entité à la carte principale lors de la réalisation de la deuxième action décrite en référence à la première phase PH1.

Selon une variante, Les étapes qui viennent d'être décrites lors de la première phase PH1 sont mises en oeuvre à chaque fois qu'au moins une carte SIM est retirée, ajoutée, remplacée par une autre carte. Si c'est le cas, la première phase PH1 est de nouveau exécutée afin de stockée dans la carte SIM principale le ou les nouveaux codes PIN. Pour cela, l'entité STK est apte à détecter tous changements de cartes SIM.

Lors de la deuxième phase PH2, si le code PIN saisi relativement à une carte, en particulier une carte autre que la carte principale SIM1, est erroné ; par exemple parce que la carte en question n'est pas celle qui a été déclarée lors de la première phase PH1 ; la carte en question transmet à l'entité un message indiquant que le code est erroné. Selon une variante, la première phase s'exécute, de préférence automatiquement sans intervention de l'utilisateur, suite à la réception d'un tel message.

Le mode de sélection de la carte principale est quelconque. Tout ou partie des cartes peuvent par exemple déclarer lors de la première phase qu'elles peuvent remplir la fonction de carte principale. Si une seule carte déclarée peut remplir cette fonction, cette dernière est automatique la carte principale. Si plusieurs cartes peuvent remplir cette fonction, l'entité peut sélectionner aléatoirement une carte parmi cette pluralité de cartes ; ou, en variante, interroger l'utilisateur afin que ce dernier sélectionne une carte principale parmi la pluralité de cartes visées ci-dessus. L'utilisateur peut en effet privilégier une carte plutôt que d'autres parce que cette carte a plus de chance de ne pas être retirée du terminal par rapport aux autres cartes.

On a vu précédemment que le procédé comprend

◦ une étape de réception (ET13-1,ET13-2) par l'entité des codes des modules ;

◦ une étape d'émission (ET14-1,ET14-2) des codes reçus aux modules de sécurité, suivi d'une étape d'enregistrement (ET16) dans un module de sécurité, dit module principal, (ET16) d'au moins un code reçu (PIN2) par l'entité relativement à un autre module (SIM2) que le module principal ;

Il faut préciser que l'étape d'émission peut s'effectuer indifféremment à réception de l'ensemble des codes ou à réception de de chaque code de sécurité.

Pour la réalisation du procédé, l'entité STK comprend

- Un module de réception des codes ;

- Un module de transmission des codes à destination d'un module de sécurité.

Pour la réalisation du procédé, la carte SIM comprend

- Un module de réception d'au moins un second code de sécurité associé à au moins un autre module ;

- Un module de stockage dudit au moins un second code ;

- Un module de transmission dudit au moins un second code après son déverrouillage.

A noter que le te terme « module » utilisé dans ce document, peut correspondre soit à un composant logiciel, soit à un composant matériel, soit encore à un ensemble de composants matériels et/ou logiciels, aptes à mettre en oeuvre la ou les fonctions décrites pour le module.

**Revendications**

1. Procédé de gestion de l'utilisation, dans un terminal, d'une pluralité de modules de sécurité (SIM1,SIM2) gérés par une entité (STK) apte à requérir la fourniture de codes de sécurité (PIN1,PIN2) pour déverrouiller les modules, respectivement, comprenant

    - une première phase d'accès aux modules (PH1) comprenant

        ◦ une étape de réception (ET13-1,ET13-2) par l'entité des codes des modules ;
        ◦ une étape d'émission (ET14-1,ET14-2) des codes reçus aux modules de sécurité, suivi d'une étape d'enregistrement (ET16) dans un module de sécurité, dit module principal, d'au moins un code reçu (PIN2) par l'entité relativement à un autre module (SIM2) que le module principal ;

    - une deuxième phase d'accès ultérieur (PH2) au cours de laquelle un déverrouillage (ET25) du module principal est suivi d'une étape de transmission (ET26,ET27) d'au moins un code (PIN2) depuis le module principal à destination d'au moins un autre module de sécurité (SIM2) correspondant audit au moins un code.

2. Procédé selon la revendication 1, **caractérisé en ce que** les modules forment un ensemble de modules, et **en ce que** la première phase d'accès s'effectue après une modification dudit ensemble.

3. Procédé selon la revendication 1, **caractérisé en ce que** la première phase d'accès s'effectue après réception d'un message issu d'au moins une carte signalant un code erroné.

4. Programme d'ordinateur comportant des instructions de code pour la mise en oeuvre du procédé selon l'une des revendications précédentes, lorsque ce programme est exécuté par un processeur.

5. Entité (STK) apte à être mise en oeuvre dans un terminal incluant une pluralité de modules de sécurité (SIM1,SIM2) aptes à requérir la fourniture des codes de sécurité pour déverrouiller les modules, comprenant:

   - Un module de réception des codes ;
   - Un module de transmission des codes (PIN1, PIN2) à destination d'un module de sécurité déverrouillé (SIM1).

6. Module de sécurité (SIM1) apte à être couplé à un terminal, ledit module étant apte à être déverrouillé au moyen d'un premier code de sécurité, comprenant:

   - Un module de réception d'au moins un second code de sécurité (PIN2) associé à au moins un autre module (SIM2);
   - Un module de stockage dudit au moins un second code (PIN2);
   - Un module de transmission dudit au moins un second code (PIN2) après son déverrouillage.

7. Terminal comprenant une entité telle que définie dans la revendication 5 et une pluralité de modules de sécurité dont un défini dans la revendication 6.

**Patentansprüche**

1. Verfahren zur Verwaltung der Verwendung einer Vielzahl von Sicherheitsmodulen (SIM1, SIM2) in einem Endgerät, die von einer Entität (STK) verwaltet werden, welche die Lieferung von Sicherheitscodes (PIN1, PIN2) anfordern kann, um je die Module zu entriegeln, das enthält:

   - eine erste Phase des Zugangs zu den Modulen (PH1), die enthält

      ◦ einen Schritt (ET13-1, ET13-2) des Empfangs der Codes der Module durch die Entität;
      ◦ einen Schritt (ET14-1,ET14-2) des Sendens der empfangenen Codes an die Sicherheitsmodule, gefolgt von einem Schritt (ET16) des Speicherns in einem Sicherheitsmodul, Hauptmodul genannt, mindestens eines von der Entität empfangenen Codes (PIN2) bezüglich eines anderen Moduls (SIM2) als das Hauptmodul;

   - eine zweite spätere Zugangsphase (PH2), während der eine Entriegelung (ET25) des Hauptmoduls von einem Schritt (ET26, ET27) der Übertragung mindestens eines Codes (PIN2) vom Hauptmodul an mindestens ein anderes Sicherheitsmodul (SIM2) gefolgt wird, das dem mindestens einen Code entspricht.

2. Verfahren nach Anspruch 1, **dadurch gekennzeichnet, dass** die Module eine Einheit von Modulen bilden, und dass die erste Zugangsphase nach einer Änderung der Einheit durchgeführt wird.

3. Verfahren nach Anspruch 1, **dadurch gekennzeichnet, dass** die erste Zugangsphase nach Empfang einer Nachricht durchgeführt wird, die von mindestens einer Karte stammt, die einen fehlerhaften Code anzeigt.

4. Computerprogramm, das Codeanweisungen zur Durchführung des Verfahrens nach einem der vorhergehenden Ansprüche aufweist, wenn dieses Programm von einem Prozessor ausgeführt wird.

5. Entität (STK), die in einem Endgerät eingesetzt werden kann, das eine Vielzahl von Sicherheitsmodulen (SIM1, SIM2) umfasst, die die Lieferung von Sicherheitscodes anfordern können, um die Module zu entriegeln, die enthält:

   - ein Empfangsmodul der Codes;
   - ein Übertragungsmodul der Codes (PIN1, PIN2) an ein entriegeltes Sicherheitsmodul (SIM1).

6. Sicherheitsmodul (SIM1), das mit einem Endgerät gekoppelt werden kann, wobei das Modul mittels eines ersten Sicherheitscodes entriegelt werden kann, das enthält:

   - ein Empfangsmodul mindestens eines zweiten Sicherheitscodes (PIN2), der mindestens einem anderen Modul (SIM2) zugeordnet ist;

- ein Speichermodul des mindestens einen zweiten Codes (PIN2);
- ein Übertragungsmodul des mindestens einen zweiten Codes (PIN2) nach seiner Entriegelung.

**7.** Endgerät, das eine wie im Anspruch 5 definierte Entität und eine Vielzahl von Sicherheitsmodulen enthält, von denen eines im Anspruch 6 definiert ist.

## Claims

**1.** Method for managing the use, in a terminal, of a plurality of security modules (SIM1, SIM2) managed by an entity (STK) capable of requesting the provision of security codes (PIN1, PIN2) in order to unlock the modules, respectively, comprising:

- a first phase of accessing the modules (PH1), comprising
- a step (ET13-1, ET13-2) of reception of the codes of the modules by the entity;
- a step (ET14-1, ET14-2) of sending the received codes to the security modules, followed by a step (ET16) of saving in a security module, referred to as the main module, of at least one code (PIN2) received by the entity and relating to a module (SIM2) other than the main module;
- a subsequent second access phase (PH2) during which unlocking (ET25) of the main module is followed by a step (ET26, ET27) of transmitting at least one code (PIN2) from the main module to at least one other security module (SIM2) corresponding to said at least one code.

**2.** Method according to Claim 1, **characterized in that** the modules form a set of modules, and **in that** the first access phase is carried out after a modification of said set.

**3.** Method according to Claim 1, **characterized in that** the first access phase is carried out after reception of a message from at least one card indicating an incorrect code.

**4.** Computer program comprising code instructions for carrying out the method according to one of the preceding claims when this program is executed by a processor.

**5.** Entity (STK) capable of being implemented in a terminal including a plurality of security modules (SIM1, SIM2) which are capable of requesting the provision of the security codes in order to unlock the modules, comprising:

- a module for reception of the codes;
- a module for transmission of the codes (PIN1, PIN2) to an unlocked security module (SIM1).

**6.** Security module (SIM1) capable of being coupled to a terminal, said module being capable of being unlocked by means of a first security code, comprising:

- a module for receiving at least one second security code (PIN2) associated with at least one other module (SIM2);
- a module for storing said at least one second code (PIN2);
- a module for transmitting said at least one second code (PIN2) after it has been unlocked.

**7.** Terminal comprising an entity as defined in Claim 5 and a plurality of security modules, including one as defined in Claim 6.

**Fig. 1**

**Fig. 2**

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 2012276955 A

**Littérature non-brevet citée dans la description**

• 3rd Generation Partnership Project; Specification of the SIM Application Toolkit for the Subscriber Identity Module - Mobile Equipment (SIM - ME) interface (Release 1999). *3GPP TS 11.14,* 1999